# EUROPEAN PATENT APPLICATION

(11) **EP 2 354 901 A1**
(43) Date of publication of application: **10.08.2011**
(21) Application number: 09845451.5
(22) Date of filing: 23.12.2009
(51) Int. Cl.: G06F 3/041

(54) **TACTILE AND TOUCH CONTROL SYSTEM**

(30) Priority: 04.06.2009 CN 200910203160
(71) Applicant: Inferpoint Systems Limited, Road Town, Tortola (VG)
(72) Inventor: CHEN, Qiliang, Guangdong 518052 (CN); CHEN, Meiying, Guangdong 518052 (CN)
(74) Representative: Moore, Graeme Patrick
(86) International application number: PCT/CN2009/075889
(87) International publication number: WO 2010/139171

(57) **Abstract**

A touch control screen (210), especially the touch control screen (210) integrated with a display panel (230). When an operator touches a tactile and touch control system (200), a touch control electrode and a touch control drive circuit (220) detect the touch position of the operator, based on the position touched by the operator, a specific electrical signal is applied to a tactile electrode (260) and is passed to a fingertip of the operator by a tactile drive circuit (270) to make the operator to obtain the tactile information. A display is overlaid on the back of the touch control screen (210), a control circuit (280) makes the tactile drive circuit (270) to apply the different electrical signal to the tactile electrode (260), based on the position touched by the operator, the difference of the display elements and the difference states of the display elements on the display screen, to make the operator to obtain the tactile information such as sense of shape, texture, sense of movement and sense of temperature of the display elements.

## Description

### BACKGROUND OF THE INVENTION

### Field of Invention

The present invention relates to a touch control screen, and more particularly, to a touch control screen integrated with a display panel for use.

### Related Art

Touch is the most important sensory perception of human beings, and is the most natural way in human-machine interaction. As the touch control screen realizes direct human-machine interaction, the touch control screen thus emerges and has already been widely applied in personal computers, smart phones, public information, intelligent household appliances, industrial control, and other fields. The wide application of touch control screens used in integration with display panels brings great convenience for people to operate the machines, and the touch control human-machine interaction already becomes an important improvement direction for human-machine interaction. In the current touch field, various touch control screens such as the resistive touch control screen, photoelectric touch control screen, ultrasonic touch control screen, and projected capacitive touch control screen are developed. Although the various touch control screens have different operation principles, the human-machine interaction can be realized.

In human-machine interaction, through the touch control screen, the machine can sense a touch of an operator, locate a touched position, accept an instruction of the operator, and perform a next action, a display panel displays or a speaker sends out new information or a result of the action of the machine, and the operator then decides a next action according to the new information received with eyes or ears. In human-machine interaction, the machine relies on the touch, and humans rely on a visual or auditory sense. The touch control screen gives the machine the touch sense, but does not provide touch information for humans. Specifically, when the operator operates an operable display element such as a push button, a dial button, a slide button, and a rotation button on a display panel on a machine through a touch control screen used in integration with a display panel, an action occurs to the operable display element, but the operator totally has no sense of movement. Moreover, display elements having different shapes (either a rectangle or a circle, a dot or a line or a face, either concave or convex, either blunt or sharp) and different textures (either rigid or soft, either smooth or rough) on the display picture touched by the finger of the operator do not have senses of shapes and textures.

In addition, with the development of the human-machine interaction, the number of operable elements on the display panel becomes larger and larger, and the density becomes larger and larger, and also parallax of the operator and shaking of the finger during operations might occur, so that misoperations may easily occur. It is very necessary to develop a touch control system with touch feedback so the touch control system can provide touch information for the operator and the contents of the human-machine interaction can be enriched.

### SUMMARY OF THE INVENTION

The present invention is to implement a touch control system capable of providing touch information for an operator. In the present invention, when the operator operates the touch with feedback system, sensing lines and a touch control unit can detect a position touched by the operator, and a touch feedback driving unit applies a specific electrical signal on a touch feedback electrode to transfer the electrical signal to a fingertip of the operator according to the position touched by the operator, so as to enable the operator to acquire touch information. A display is overlaid behind the touch control screen, so the operator can acquire touch information such as senses of shapes, textures, movements, and even temperatures and colors of the display element according to positions touched by the operator, different display elements, and different statuses of the display elements on the display picture.

The technical problems of the present invention are solved through the following technical solution.

A touch with feedback system is provided, which is formed of a substrate, sensing lines, a touch control unit, touch feedback electrodes, a touch feedback driving unit, and a control circuit. The sensing lines and the touch control unit are used for detecting a position of the finger of the operator on the substrate. The touch feedback electrodes and the touch feedback driving unit are used for providing touch information for the detected finger of the operator. The touch feedback electrodes are disposed on a surface of the substrate at a side facing a user disposed with the sensing lines used for detecting a touch control position. The sensing lines are connected to the touch control unit, the touch feedback electrodes are connected to the touch feedback driving unit to transmit a touch feedback signal, and both the touch control unit and the touch feedback driving unit are connected to the control circuit. The control circuit enables the touch feedback driving unit to apply different electrical signals on the touch feedback electrodes according to different positions of the touch control screen touched by the operator.

The technical problems of the present invention are further solved through the following technical solution.

A touch with feedback system is provided, which is formed of a display panel, a display driving circuit, sensing lines, a touch control unit, touch feedback electrodes, a touch feedback driving unit, and a control circuit. The display panel us used for displaying information. The sensing lines and the touch control unit are used for detecting a position of a finger of an operator on the substrate. The touch feedback electrodes and the touch feedback driving unit are used for providing touch information for the detected finger of the operator. The touch feedback electrodes are disposed on a surface of the substrate at a side facing a user of the display panel. The display panel is connected to the display driving circuit, the sensing lines are connected to the touch control unit, and the touch feedback electrodes are connected to the touch feedback driving unit, and all the display driving circuit, the touch control unit, and the touch feedback driving unit are connected to the control circuit. The control circuit enables the touch feedback driving unit to apply different electrical signals on the touch feedback electrodes according to positions touched by the operator, different display elements, and different statuses of the display elements on the display picture.

The substrate disposed with the touch feedback electrodes has an active device array. Two groups of touch feedback electrode wires are connected to two terminals of each active device in the active device array respectively. The other terminal of the active device is then connected to touch feedback emission electrodes.

The active device array is a thin-film transistor (TFT) array. The two groups of touch feedback electrode wires are connected to a grid and a source of a TFT respectively, and a drain of the TFT is connected to a touch feedback emission electrode group. The two groups of touch feedback electrode wires and the touch feedback emission electrode group are isolated by insulating layers.

The sensing lines and the touch feedback electrodes are disposed on different substrates.

The sensing lines and the touch feedback electrodes are disposed on different surfaces of a same substrate, or disposed on a same surface of a same substrate.

The touch feedback electrodes and the sensing lines time division multiplexes the same electrodes.

The touch feedback electrodes can cover a whole upper surface of the substrate, and can also cover only a part of the upper surface of the substrate.

The touch feedback electrode can be a planar electrode, a mesh electrode, a block electrode or a wire electrode.

An insulating protection layer is disposed on the surface of the touch feedback electrodes.

The touch feedback driving unit applies different electrical signals on the touch feedback electrodes, which means at least one of a signal frequency, strength, and discontinuity is different.

The display element can be an operable display element such as a push button, a dial button, a slide button, a rotation button, and can also be a non-operable display element.

The electrical signals applied on the touch feedback electrodes by the touch feedback driving unit are different according to different positions inside display elements on a display picture touched by the finger of the operator.

A loop is formed for the touch feedback signal of the touch with feedback system. When one or more touch feedback electrodes are in communication with an output terminal of a touch excitation source and apply touch feedback signals on a touch feedback object, one or more other touch feedback electrodes are in communication with another output terminal of the touch excitation source or in communication with another touch excitation source, so as to provide a current return-loop path for the touch feedback signal, and two or more touch feedback electrodes connected to different output terminals of the touch feedback signal, the touch feedback object, and a coupling capacitor between the touch feedback object and the touch feedback electrode form a touch feedback loop.

In the touch with feedback system, the touch feedback electrodes used for providing the current return-loop path for the touch feedback signal are disposed on a surface of the substrate in the touch with feedback system, which are a part or all of touch feedback electrodes not staggered or staggered with the touch feedback electrodes for applying touch feedback signals on the surface of the substrate, or are disposed on an outer case of the touch with feedback system.

The touch feedback electrodes that are not staggered with the touch feedback electrodes for applying the touch feedback signal and used for providing a current return-loop path for the touch feedback signal are electrodes at one side or two sides adjacent to the touch feedback electrodes for applying the touch feedback signal.

An output terminal of the touch excitation source is a positive output terminal of a direct current (DC) touch feedback excitation signal, or an alternating current (AC) output terminal of an AC touch feedback excitation signal, or a pulse output terminal of a pulse touch feedback excitation signal. The other output terminal of the touch excitation source is a negative output terminal of the DC touch feedback excitation signal, or the other output terminal of the AC touch feedback excitation signal, or a ground output terminal of the pulse touch feedback excitation signal.

Compared with the prior art, the present invention and has the following beneficial effects.

The present invention can implement a touch control system with touch feedback. For the touch with feedback system according to the present invention, the touch control screen locates a position touched by the operator, and then provides different touch information for the operator according to positions touched by the operator, different display elements, and different statuses of the display elements on the display picture. The touch with feedback system can provide different electrical signals for the operator through the touch feedback electrodes according to different shapes of display elements touched by the finger of the operator on the display picture, so the operator acquires touch information of a sense of a shape such as either a rectangle or a circle, a dot or a line or a face, either concave or convex, and either blunt or sharp. The touch with feedback system can also provide different electrical signals for the operator through touch feedback electrodes according to different textures of display elements touched by the finger of the operator, so the operator acquires touch information of textures such as either rigid or soft, and either smooth or rough. The touch with feedback system can also provide different electrical signals for the operator through touch feedback electrodes according to different statuses of movement of the display elements touched by the finger of the operator, so the operator acquires touch information of a motional sense such as movement and shaking. The touch with feedback system can also provide different electrical signals for the operator through touch feedback electrodes in the process that actions occur to the operable display elements when the operator touches with the finger to operate operable display elements such as a push button, a dial button, a slide button, and a rotation button on the display panel of the machine, so the operator acquires touch information such as a sense of an action such as pushing, dialing, sliding, and rotating.

During the human-machine interaction of the present invention, bidirectional touch interaction can be realized, so contents of the human-machine interaction are enriched, and misoperations can be prevented.

The present invention further provides a solution of operating the machine in a dark environment, and even develops electric braille, electric books for blind people, and computers for blind people accordingly.

### BRIEF DESCRIPTION OF THE DRAWINGS

The present invention will become more fully understood from the detailed description given herein below for illustration only, and thus are not limitative of the present invention, and wherein:
FIG. 1 is a schematic view of electrical connections and structures according to a first embodiment of the present invention;
FIG. 2 is a schematic view of electrical connections and structures according to a second embodiment of the present invention;
FIG. 3 is a schematic view of electrical connections and structures according to a third embodiment of the present invention;
FIG. 4 is a schematic view of electrical connections and structures according to a fourth embodiment of the present invention;
FIG. 5 is a schematic view of electrical connections and structures according to a fifth embodiment of the present invention;
FIG. 6 is a schematic view of electrical connections and structures according to a sixth embodiment of the present invention;
FIG. 7 is a schematic view of electrical connections and structures according to a seventh embodiment of the present invention;
FIG. 8 is a schematic view of electrical connections and structures according to an eighth embodiment of the present invention;
FIG. 9 is a schematic view of electrical connections and structures according to a ninth embodiment of the present invention;
FIG. 10 is a schematic view of electrical connections and structures according to a tenth embodiment of the present invention; and
FIG. 11 is a schematic view of electrical connections and structures according to an eleventh embodiment of the present invention.

### DETAILED DESCRIPTION OF THE INVENTION

### First Embodiment

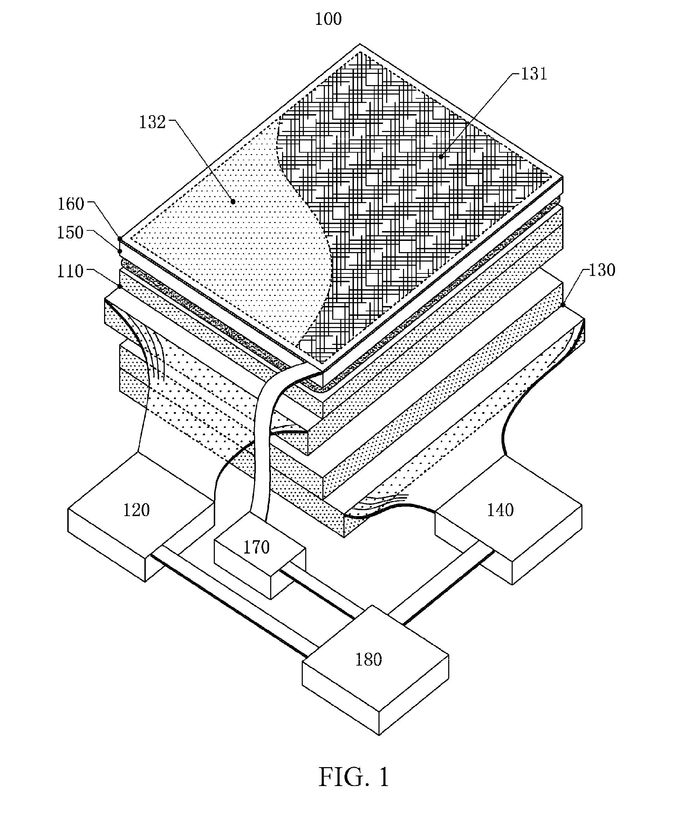

As shown in FIG. 1, a touch with feedback system 100 includes a resistive touch control screen 110, a touch control unit 120, a display panel 130, a display driving circuit 140, a flexible transparent substrate 150, touch feedback electrodes 160, a touch feedback driving unit 170, and a control circuit 180. The touch feedback electrodes 160 are transparent planar electrodes and disposed on the flexible transparent substrate 150, and cover a whole upper surface of the flexible transparent substrate 150. The flexible transparent substrate 150 is placed at a side facing a user of the touch control screen 110 with the touch feedback electrodes 160 facing outward, and is bonded to the touch control screen 110 together. The touch control screen 110 is placed on the display panel 130. The touch control screen 110 is connected to the touch control unit 120, the display panel 130 is connected to the display driving circuit 140, and the touch feedback electrodes 160 are connected to the touch feedback driving unit 170, and all the touch control unit 120, the display driving circuit 140, and the touch feedback driving unit 170 are connected to the control circuit 180.

In one case, display contents inside a display area 131 of the display panel 130 are fabric display elements having a rough texture, and display contents inside a rest display area 132 of the display panel 130 are leather display elements having a smooth texture.

When a finger of an operator touches a position corresponding to a display area 131 of the display panel 130 on the touch control screen 110, the touch control screen 110 and the touch control unit 120 detect a position on the touch control screen touched by the finger of the operator, and transfer information of the position touched by the operator to the control circuit 180. The control circuit 180 finds corresponding display contents in the display area 131 of the display panel 130 are fabric display elements having a rough texture according to the position touched by the operator, and instructs the touch feedback driving unit 170 to apply an electrical signal making people feel a touch sense of rough fabric on the touch feedback electrodes 160. The touch feedback electrodes 160 then transfer the electrical signal with the touch sense of the rough fabric to a finger tip of the operator, so the operator acquires touch information of rough fabric.

When the position touched by the finger of the operator on the touch control screen 110 moves to a corresponding position in the display area 132 of the display panel 130, the touch control screen 110 and the touch control unit 120 detect the position touched by the finger of the operator on the touch control screen, information of the position touched by the operator is transferred to the control circuit 180 again. The control circuit 180 finds that corresponding display contents in the display area 132 of the display panel 130 are leather display elements having a smooth texture according to the position touched by the operator, and instructs the touch feedback driving unit 170 to apply an electrical signal making people feel a smooth leather touch sense to the touch feedback electrodes 160. The touch feedback electrodes 160 then transfer the electrical signal with the smooth leather touch sense to the finger tip of the operator, so the operator acquires touch information of the smooth leather. Therefore, when the finger of the operator touches corresponding different display areas on the touch control screen, a touch sense of either rough fabric or smooth leather is acquired.

In another case, at a previous moment, the display contents inside the display area 131 of the display panel 130 are fabric display elements having a rough texture, and the display contents inside the rest display area 132 of the display panel 130 are leather display elements having a smooth texture.

When the finger of the operator touches the corresponding position in the display area 131 of the display panel 130 on the touch control screen 110, the touch control screen 110 and the touch control unit 120 detect the position touched by the finger of the operator on the touch control screen, and transfers the information of the position touched by the operator to the control circuit 180. The control circuit 180 finds that the display corresponding contents in the display area 131 of the display panel 130 are fabric display elements having a rough texture according to the position touched by the operator, and instructs the touch feedback driving unit 170 to apply an electrical signal making people feel a touch sense of rough fabric on the touch feedback electrodes 160. The touch feedback electrodes 160 then transfer the electrical signal having the touch sense of rough fabric to the finger tip of the operator, so the operator acquires the touch information of the rough fabric.

When the position touched by the finger of the operator on the touch control screen 110 moves to the corresponding position in the display area 132 of the display panel 130, the touch control screen 110 and the touch control unit 120 detect the position touched by the finger of the operator on the touch control screen, and then transfers the information of the position touched by the operator to the control circuit 180. The control circuit 180 finds that the corresponding display contents in the display area 132 of the display panel 130 are leather display elements having a smooth texture according to the position touched by the operator, and instructs the touch feedback driving unit 170 to apply the electrical signals making people have a touch sense of smooth leather on the touch feedback electrodes 160. The touch feedback electrodes 160 then transfer the electrical signals with the touch sense of smooth leather to the finger tip of the operator, so the operator acquires the touch information of smooth leather. Next, the operator sends an instruction to the control circuit 180 through the touch control screen 110, and moves the display elements of the rough fabric inside the display area 131 of the display panel 130 away, and the control circuit 180 sends a corresponding instruction to the display driving circuit 140, so the display driving circuit 140 sends a display drive signal of the smooth leather to the display area 131 of the display panel 130, such that the display contents inside the display area 131 of the display panel 130 turn into the leather display elements having a smooth texture.

When the finger of the operator touches the corresponding position in the display area 131 of the display panel 130 on the touch control screen 110 again, the touch control screen 110 and the touch control unit 120 detect the position touched by the finger of the operator on the touch control screen, and then transfer the information of the position touched by the operator to the control circuit 180. The control circuit 180 finds that the corresponding display contents in the display area 131 of the display panel 130 already change into the leather display elements having a smooth texture according to the position touched by the operator, and instructs the touch feedback driving unit 170 to apply electrical signals making people feel a touch sense of the smooth leather on the touch feedback electrodes 160. The touch feedback electrodes 160 then transfer the electrical signals having the touch sense of the smooth leather to the finger tip of the operator, so the operator acquires the touch information of smooth leather.

Thus, the operator can acquire a touch sense of either rough fabric or smooth leather by moving the display elements and touching corresponding same display areas on the touch control screen at different moments with the finger. The touch control system 100 can thus become a touch with feedback system capable of providing the touch information.

### Second Embodiment

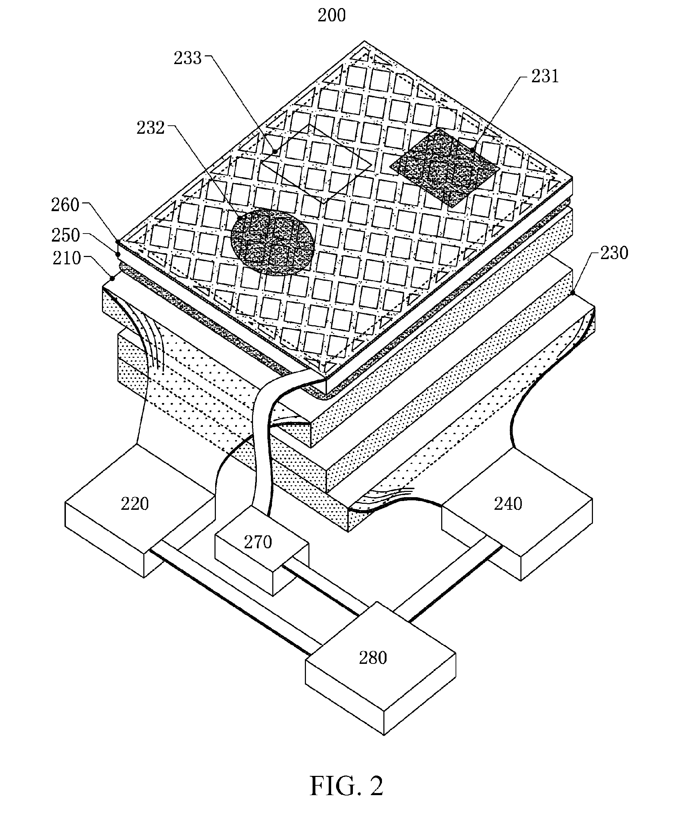

As shown in FIG. 2, a touch with feedback system 200 includes a capacitive touch control screen 210, a touch control unit 220, a display panel 230, a display driving circuit 240, a transparent substrate 250, touch feedback electrodes 260, a touch feedback driving unit 270, and a control circuit 280. The touch feedback electrodes 260 are transparent mesh electrodes formed of two groups of diagonal strip electrodes and disposed on the transparent substrate 250, and cover a whole upper surface of the transparent substrate 250. The two groups of diagonal strip electrodes have an included angle greater than 20° and smaller than 160°. In order to make the finger of the operator to contact the touch feedback electrodes 260 all the time, a distance between diagonal strip electrodes in parallel is not greater than 20 mm. The transparent substrate 250 is placed at a side facing a user of the touch control screen 210 with the touch feedback electrodes 260 facing outward, and is bonded to the touch control screen 210 together. The touch control screen 210 is placed on the display panel 230. The touch control screen 210 is connected to the touch control unit 220, the display panel 230 is connected to the display driving circuit 240, and the touch feedback electrodes 260 are connected to the touch feedback driving unit 270. All the touch control unit 220, the display driving circuit 240, and the touch feedback driving unit 270 are connected to the control circuit 280.

The display contents inside the display area 231 of the display panel 230 are display elements having a rectangle shape, and the display contents in another display area 232 of the display panel 230 are display elements having a circular shape. The finger of the operator moves on the touch control screen 210.

When the finger moves to corresponding positions outside the display areas 231 and 232 of the display panel 230, the touch control screen 210 and the touch control unit 220 detect the position touched by the finger of the operator on the touch control screen, and transfer the information of the position touched by the operator to the control circuit 280. The control circuit 280 instructs the touch feedback driving unit 270 not to apply any electrical signal on the touch feedback electrodes 260 according to the position touched by the operator outside the display areas 231 and 232 of the display panel 230, and the touch feedback electrodes 260 do not provide any touch information for the operator.

When the finger moves to the corresponding position in the display area 231 of the display panel 230, the touch control screen 210 and the touch control unit 220 detect the position touched by the finger of the operator on the touch control screen, and transfers the information of the position touched by the operator to the control circuit 280. The control circuit 280 instructs the touch feedback driving unit 270 to apply electrical signals making people feel a touch sense on the touch feedback electrodes 260 according to the position touched by the operator inside the display area 231 of the display panel 230. The touch feedback electrodes 260 then transfer the touch feedback electrical signal to the finger tip of the operator, so the operator acquires the touch information. The operator can feel the sense of rectangles of the display elements inside the display area 231 as the touch of the finger moves on the touch control screen 210.

When the finger moves to the corresponding position in the display area 232 of the display panel 230, the touch control screen 210 and the touch control unit 220 detect the position touched by the finger of the operator on the touch control screen, and transfer the information of the position touched by the operator to the control circuit 280. The control circuit 280 instructs the touch feedback driving unit 270 to apply an electrical signal making people feel a touch sense on the touch feedback electrodes 260 according to the position touched by the operator inside the display area 232 of the display panel 230. The touch feedback electrodes 260 then transfer a touch feedback electrical signal to the finger tip of the operator, so the operator acquires the touch information. The operator can feel a sense of a circle of the display element inside the display area 232 as the touch of the finger moves on the touch control screen 210.

Subsequently, the operator sends an instruction to the control circuit 280 through the touch control screen 210, so as to move a rectangular display element inside the display area 231 of the display panel 230 into the display area 233, and the control circuit 280 sends a corresponding instruction to the display driving circuit 240, so the display driving circuit 240 sends a background display drive signal to the display area 231 of the display panel 230, such that the display contents of the display area 231 of the display panel 230 turn into corresponding previous background display elements outside the display areas 231 and 232 of the display panel 230. When the finger of the operator touches the corresponding position in the display area 231 of the display panel 230 on the touch control screen 210 again, the touch control screen 210 and the touch control unit 220 detect the position touched by the finger of the operator on the touch control screen, and transfer the information of the position touched by the operator to the control circuit 280 again. The control circuit 280 instructs the touch feedback driving unit 270 not to apply any electrical signal on the touch feedback electrodes 260, and the operator no longer feels a sense of a shape of a display element inside the display area 233. When the finger moves to the corresponding position in the display area 233 of the display panel 230, the touch control screen 210 and the touch control unit 220 transfer the information of the position touched by the operator to the control circuit 280. The control circuit 280 instructs the touch feedback driving unit 270 to apply an electrical signal making people feel a touch sense on the touch feedback electrodes 260 according to the position touched by the operator inside the display area 233 of the display panel 230. The operator can feel the sense of the rectangle of the display element inside the display area 233 again as the touch of the finger moves on the touch control screen 210.

Thus, when the touch of the finger of the operator moves on the touch control screen, the operator feels a shape of either a rectangle or a circle, either large or small, either long or short, or a dot or a line or a face of a different display element. The touch control system 200 then becomes a touch with feedback system capable of providing the touch information.

When the AC electrical signal applied on the touch feedback electrodes by the touch feedback driving unit changes with the touched position, at least one of a frequency, strength, and discontinuity of the signal is changed.

### Third Embodiment

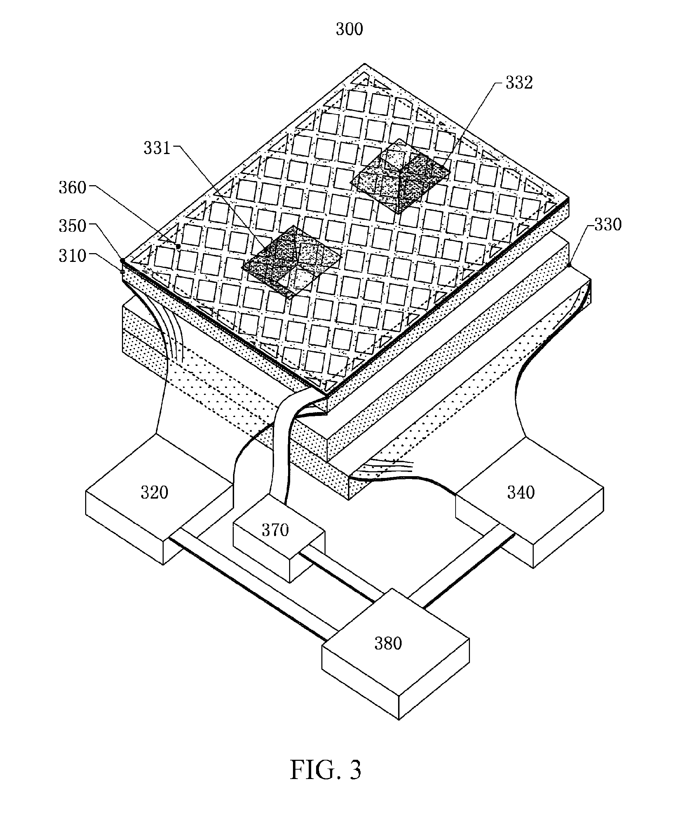

As shown in FIG. 3, a touch with feedback system 300 includes a capacitive touch control screen 310, a touch control unit 320, a display panel 330, a display driving circuit 340, an insulating protection layer 350, touch feedback electrodes 360, a touch feedback driving unit 370, and a control circuit 380. The touch feedback electrodes 360 are transparent mesh electrodes and directly disposed on a substrate of the touch control screen 310, and cover a whole upper surface of the substrate at a side facing a user. The insulating protection layer 350 is disposed on a surface of the touch feedback electrodes 360. The touch control screen 310 is placed on the display panel 330. The touch control screen 310 is connected to the touch control unit 320, the display panel 330 is connected to the display driving circuit 340, the touch feedback electrodes 360 are connected to the touch feedback driving unit 370, and all the touch control unit 320, the display driving circuit 340, the touch feedback driving unit 370 are connected to the control circuit 380.

The display contents inside the display area 331 of the display panel 330 are display elements having a concave shape, and the display contents inside another display area 332 of the display panel 330 are display elements having a convex shape. The touch of the finger of the operator moves on the touch control screen 310.

When the finger moves to a corresponding position outside the display areas 331 and 332 of the display panel 330, the touch control screen 310 and the touch control unit 320 detect the position touched by the finger of the operator on the touch control screen, and transfer the information of the position touched by the operator to the control circuit 380. The control circuit 380 instructs the touch feedback driving unit 370 to apply an AC electrical signal corresponding to strength of the planar display element on the touch feedback electrodes 360 according to the position touched by the operator outside the display areas 331 and 332 of the display panel 330. Although the surface of the touch feedback electrode 360 is disposed with the insulating protection layer 350, the AC electrical signal sent by the touch feedback driving unit 370 can still penetrate the insulating protection layer 350, so the operator acquires the planar touch information.

When the finger moves to a corresponding edge of the display area 331 of the display panel 330, the touch control screen 310 and the touch control unit 320 detect the position touched by the finger of the operator on the touch control screen, and transfer the information of the position touched by the operator to the control circuit 380. The control circuit 380 instructs the touch feedback driving unit 370 to apply an AC electrical signal having strength slightly smaller than that of the electrical signal applied at the planar display element on the touch feedback electrodes 360 according to the edge position of the display area 331 of the display panel 330 touched by the operator. As the finger tip of the operator gradually moves towards a center of the display area 331, the AC applied on the touch feedback electrodes 360 by the touch feedback driving unit 370 gradually decreases, and as the finger tip of the operator gradually moves away from the center of the display area 331, the AC applied on the touch feedback electrodes 360 by the touch feedback driving unit 370 gradually increases. As the touch of the finger of the operator moves near the corresponding display area 331 on the touch control screen 310, the operator feels a three-dimensional sense of a concave display element inside the display area 331.

When the finger moves to the corresponding edge of the display area 332 of the display panel 330, the touch control screen 310 and the touch control unit 320 detect the position touched by the finger of the operator on the touch control screen, and transfer the information of the position touched by the operator to the control circuit 380. The control circuit 380 instructs the touch feedback driving unit 370 to apply an AC electrical signal having strength slightly greater than that of the electrical signal applied at the planar display element on the touch feedback electrodes 360 according to the edge position of the display area 332 of the display panel 330 touched by the operator. As the finger tip of the operator gradually moves towards the center of the display area 332, the AC applied on the touch feedback electrodes 360 by the touch feedback driving unit 370 gradually increases, and as the finger tip of the operator gradually moves away from the center of the display area 332, the AC applied on the touch feedback electrodes 360 by the touch feedback driving unit 370 gradually decreases. As the touch of the finger moves near the corresponding display area 332 on the touch control screen 310, the operator feels a three-dimensional sense of a convex display element inside the display area 332.

Thus, as the touch of the finger moves on the whole touch control screen, the operator feels a ripple-like three-dimensional sense that fluctuates on the whole screen. So the touch control system 300 becomes a touch with feedback system capable of providing touch information.

### Fourth Embodiment

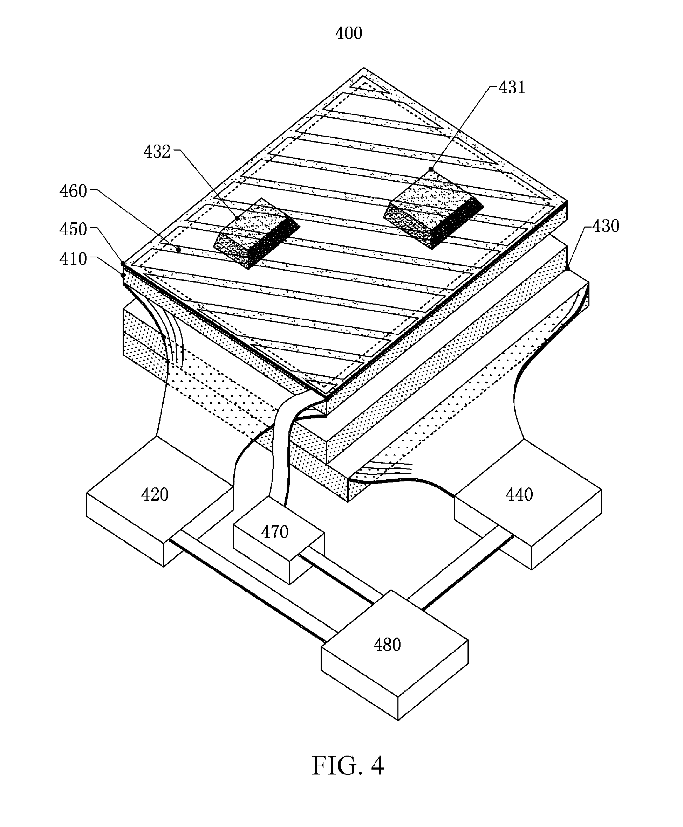

As shown in FIG. 4, a touch with feedback system 400 includes a capacitive touch control screen 410, a touch control unit 420, a display panel 430, a display driving circuit 440, an insulating protection layer 450, touch feedback electrodes 460, a touch feedback driving unit 470, and a control circuit 480. The touch feedback electrodes 460 are transparent diagonal strip electrodes and directly disposed on the substrate of the touch control screen 410, and cover a whole upper surface of the substrate at a side facing a user. The insulating protection layer 450 is disposed on the surface of the touch feedback electrodes 460. The touch control screen 410 is placed on the display panel 430. The touch control screen 410 is connected to the touch control unit 420, the display panel 430 is connected to the display driving circuit 440, the touch feedback electrodes 460 are connected to the touch feedback driving unit 470, and all the touch control unit 420, the display driving circuit 440, the touch feedback driving unit 470 are connected to the control circuit 480.

The display panel 430 has a push-button operable display element 431, and a slide-button operable display element 432, and the rest background display elements of the display panel 430 are non-operable display elements.

When a finger of an operator touches corresponding positions other than the push button display element 431 and the slide-button display element 432 of the display panel 430 on the touch control screen 410, the touch control screen 410 and the touch control unit 420 detect the position touched by the finger of the operator on the touch control screen, and transfers the information of the position touched by the operator to the control circuit 480. The control circuit 480 instructs the touch feedback driving unit 470 not to apply any electrical signal on the touch feedback electrodes 460 according to the position touched by the operator other than the push button display element 431 and the slide-button display element 432 of the display panel 430, so the touch feedback electrodes 460 do not provide any touch information for the operator.

When the finger of the operator touches the corresponding push button display element 431 of the display panel 430, the touch control screen 410 and the touch control unit 420 detect the position touched by the operator finger on the touch control screen, and transfer the information of the information of the position touched by the operator to the control circuit 480. The control circuit 480 instructs the display driving circuit 440 to change the display drive signal applied on the display panel 430 according to the position of the push button display element 431 of the display panel 430 touched by the operator, so the push button display element 431 displays an action status of being pushed down, and at the same time, instructs the touch feedback driving unit 470 to apply a decreasing AC electrical signal on the touch feedback electrodes 460, so the operator feels a sense of an action that the push button display element 431 is pushed down. When the finger of the operator touches the corresponding push button display element 431 of the display panel 430 again, the control circuit 480 instructs the display driving circuit 440 to change the display drive signal applied on the display panel 430 again according to the position of the push button display element 431 of the display panel 430 touched by the operator, so the push button display element 431 displays an action status of being pressed to bounce upward, and at the same time instructs the touch feedback driving unit 470 to apply an increasing AC electrical signal on the touch feedback electrodes 460, so the operator feels an sense of an action that the push button display element 431 is pressed to bounce upward. When the finger of the operator moves away from the push button display element 431, the operator loses the touch sense of touching the operable display element.

When the operator finger touches the corresponding slide-button display element 432 of the display panel 430, the touch control screen 410 and the touch control unit 420 detect the position touched by the finger of the operator on the touch control screen, and transfer the information of the position touched by the operator to the control circuit 480. The control circuit 480 instructs the touch feedback driving unit 470 to apply a continuous AC electrical signal on the touch feedback electrodes 460 according to the position of the slide-button display element 432 of the display panel 430 touched by the operator, so the operator has a touch sense of touching the operable display element. When the finger of the operator is held onto the corresponding slide-button display element 432 and moves on the touch control screen 410, the control circuit 480 instructs the display driving circuit 440 to change the display drive signal applied on the display panel 430 according to the position touched by the operator, so the slide-button display element 432 moves with the finger of the operator, and at the same time, instructs the touch feedback driving unit 470 to apply a discontinuous AC electrical signal on the touch feedback electrodes 460, so that the operator feels an action sense that the slide-button display element 432 moves with the finger. When the finger of the operator touches the touch control screen 410 and stops moving, the slide-button display element 432 also stops move accordingly, and the control circuit 480 instructs the touch feedback driving unit 470 to recover to apply the continuous AC electrical signal on the touch feedback electrodes 460, so the operator has a touch sense of touching the operable display element but does not have an action sense of movement. When the finger of the operator leaves the touch control screen 410, the slide-button display element 432 stops moving accordingly, and stays at a position when the finger of the operator leaves the touch control screen 410.

Thus, when the finger of the operator moves on the touch control screen, the operator feels a sense of an action of the operable display element. The touch control system 400 thus becomes a touch with feedback system capable of providing touch information.

### Fifth Embodiment

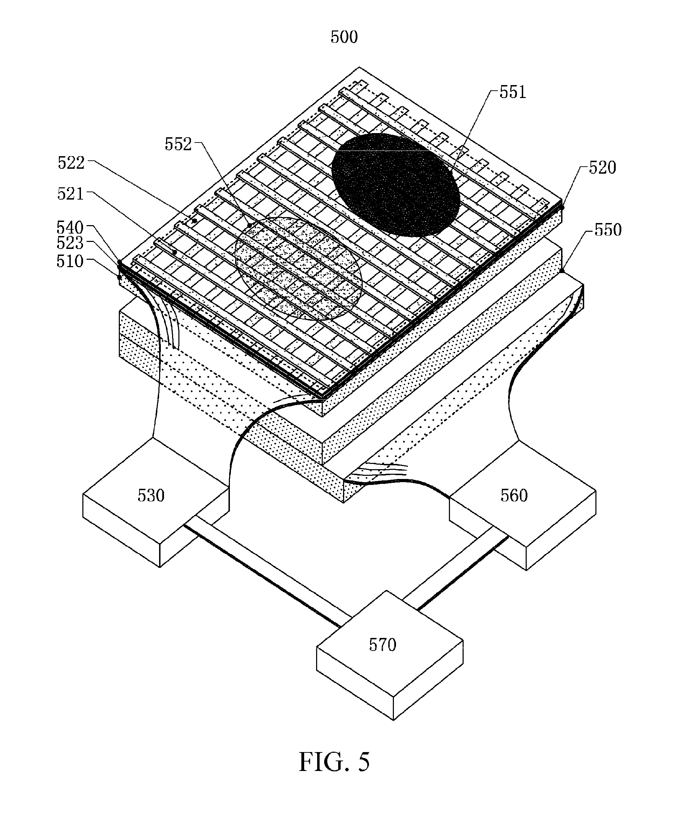

As shown in FIG. 5, a touch with feedback system 500 includes a touch control screen substrate 510, touch system and touch feedback sharing electrodes 520, a touch control and touch feedback driving composite unit 530, an optical matching layer 540, a display panel 550, a display driving circuit 560, and a control circuit 570. The touch system and touch feedback sharing electrodes 520 are formed of two staggered transparent strip electrode groups 521 and 522, and the electrode group 521 and the electrode group 522 are isolated by an insulating layer 523. The touch system and touch feedback sharing electrodes 520 are directly disposed on an upper surface of the touch control screen substrate 510 at a side facing a user, and cover the whole substrate. The touch system and touch feedback sharing electrodes 520 are disposed with the optical matching layer 540. The optical matching layer 540 is used for reducing unevenness of optical characteristics. The touch control screen substrate 510 is placed on the display panel 550. The touch system and touch feedback sharing electrodes 520 are repetitively and rapidly switched between being used for touch control detection and being used for touch feedback signal provision. The touch control detection and the touch feedback signal provision time division multiplex the same electrode, a touch control detection and touch feedback signal provision time division multiplexing driver-the touch control and touch feedback driving composite unit 530 is used for both touch control detection and touch feedback signal provision. The touch system and touch feedback sharing electrodes 520 are connected to the touch control and touch feedback driving composite unit 530, the display panel 550 is connected to the display driving circuit 560, and the touch control and touch feedback driving composite unit 530 and the display driving circuit 560 are connected to the control circuit 570.

The display panel 550 has a hot display element 551 and cold display element 552 thereon, and background display elements at the rest portion of the display panel 550 are warm display elements.

When the finger of the operator touches a corresponding position outside the hot display element 551 and the cold display element 552 of the display panel 550 on the touch control system 500, the touch system and touch feedback sharing electrodes 520 and the touch control and touch feedback driving composite unit 530 are first used for sensing touch control, which detect the position touched by the finger of the operator on the touch control screen, and transfer the information of the position touched by the operator to the control circuit 570. The touch system and touch feedback sharing electrodes 520 and the touch control and touch feedback driving composite unit 530 are then used for providing touch feedback signals. The control circuit 570 instructs the touch control and touch feedback driving composite unit 530 to apply a touch electrical signal making people have a sense of a medium temperature on the touch system and touch feedback sharing electrodes 520 according to the position touched by the operator outside the hot display element 551 and the cold display element 552 of the display panel 550, so the operator acquires warm touch information.

When the finger of the operator touches the corresponding hot display element 551 of the display panel 550, the touch system and touch feedback sharing electrodes 520 and the touch control and touch feedback driving composite unit 530 detect the position touched by the finger of the operator on the touch control screen, and transfer the information of the position touched by the operator to the control circuit 570. The control circuit 570 instructs the touch control and touch feedback driving composite unit 530 to apply a touch electrical signal making people have a sense of a high temperature on the touch system and touch feedback sharing electrodes 520 according to the position of the hot display element 551 of the display panel 550 touched by the operator, so the operator acquires hot touch information.

When the finger of the operator touches the corresponding cold display element 552 of the display panel 550, the touch system and touch feedback sharing electrodes 520 and the touch control and touch feedback driving composite unit 530 detect the position touched by the finger of the operator on the touch control screen, and transfer the information of the position touched by the operator to the control circuit 570. The control circuit 570 instructs the touch control and touch feedback driving composite unit 530 to apply a touch electrical signal making people have a sense of a low temperature on the touch system and touch feedback sharing electrodes 520 according to the position of the cold display element 552 of the display panel 550 touched by the operator, so the operator acquires cold touch information.

Thus, when the finger of the operator touches the touch control screen and moves, the operator feels a temperature sense of a hot source display element. The touch control system 500 thus becomes a touch with feedback system capable of providing touch information.

When the AC electrical signal applied on the touch feedback electrodes by the touch feedback driving unit changes with the temperature of the display element, at least one of a frequency, strength, discontinuity of the signal is changed.

### Sixth Embodiment

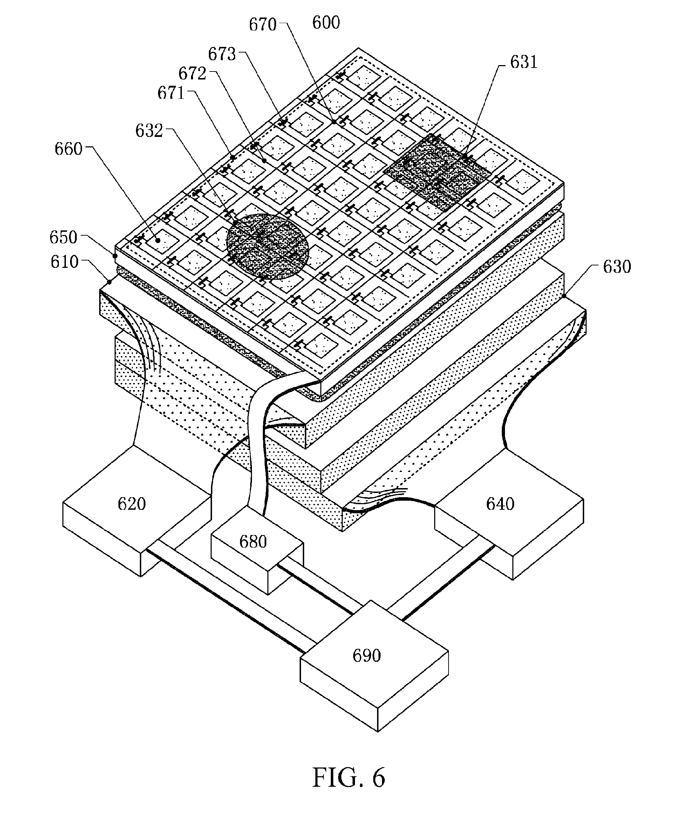

As shown in FIG. 6, the touch with feedback system 600 includes a touch control screen 610, a touch control unit 620, a display panel 630, a display driving circuit 640, a transparent substrate 650, touch feedback emission electrodes 660, a touch feedback drive active array 670, a touch feedback driving unit 680, and a control circuit 690. The touch feedback emission electrodes 660 are block transparent electrodes arranged in arrays and disposed on the transparent substrate 650, which cover the whole upper surface of the transparent substrate 650. The touch feedback drive active array 670 is formed of two staggered touch feedback electrode wire groups 671 and 672, and a TFT array 673. The touch feedback electrode wire group 671 and the touch feedback electrode wire group 672 are isolated by an insulating layer. A grid of each TFT in the TFT array 673 is connected to the touch feedback electrode wire group 671, a source of TFT in the TFT array 673 is connected to the touch feedback electrode wire group 672, and a drain of each TFT in the TFT array 673 is connected to a block transparent electrode in the array of the touch feedback emission electrodes 660. The transparent substrate 650 is placed at a side facing a user of the touch control screen 610 with the touch feedback emission electrodes 660 facing outward, and bonded to the touch control screen 610 together. The touch control screen 610 is placed on the display panel 630. The touch control screen 610 is connected to the touch control unit 620, the display panel 630 is connected to the display driving circuit 640, the touch feedback drive active array 670 is connected to the touch feedback driving unit 680, and all the touch control unit 620, the display driving unit 640, and the touch feedback driving unit 680 are connected to the control circuit 690.

The display contents inside the display area 631 of the display panel 630 are display elements having a rectangular shape, and the display contents in another display area 632 of the display panel 630 are display elements having a circular shape.

When the finger of the operator touches a corresponding position outside the display areas 631 and 632 of the display panel 630, the touch control screen 610 and the touch control unit 620 detect the position touched by the finger of the operator on the touch control screen, and transfer the information of the position touched by the operator to the control circuit 690. The control circuit 690 instructs the touch feedback driving unit 680 not to apply any electrical signal on the touch feedback electrode wire groups 671 and 672 of the touch feedback drive active array 670 according to the position touched by the operator outside the display areas 631 and 632 of the display panel 630, and the touch feedback emission electrodes 660 do not provide any touch information for the operator.

When the finger touches the corresponding position in the display area 631 of the display panel 630, the touch control screen 610 and the touch control unit 620 detect the position touched by the finger of the operator on the touch control screen, and transfer the information of the position touched by the operator to the control circuit 690. The control circuit 690 instructs the touch feedback driving unit 680 to apply a DC electrical signal on a part of electrode wires corresponding to the display area 631 in the touch feedback electrode wire group 672 according to the position touched by the operator inside the display area 631 of the display panel 630, and at the same time the touch feedback driving unit 680 applies a discontinuous electrical signal on a part of electrode wires corresponding to the display area 631 in the touch feedback electrode wire group 671, so the transparent electrodes of the touch feedback emission electrodes 660 corresponding to the portion of the display area 631 acquire a discontinuous pulse electrical signal through a drain of a TFT. The touch feedback emission electrodes 660 then transfer the touch feedback electrical signal to the finger tip of the operator, so the operator acquires touch information. As the touch of the finger moves on the touch control screen 610, the operator feels a sense of rectangle of the display element inside the display area 631.

When the finger touches the corresponding position in the display area 632 of the display panel 630, the touch control screen 610 and the touch control unit 620 detect the position touched by the finger of the operator on the touch control screen, and transfer the information of the position touched by the operator to the control circuit 690. The control circuit 690 instructs the touch feedback driving unit 680 to apply a DC electrical signal on a part of the electrode wires corresponding to the display area 632 in the touch feedback electrode wire group 672 according to the position touched by the operator inside the display area 632 of the display panel 630, and at the same time the touch feedback driving unit 680 applies a discontinuous electrical signal on a part of the electrode wires corresponding to the display area 632 in the touch feedback electrode wire group 671, so the transparent electrodes corresponding to the portion of the display area 632 of the touch feedback emission electrodes 660 acquires a discontinuous pulse electrical signal through the drain of the TFT. The touch feedback emission electrodes 660 then transfer the touch feedback electrical signal to the finger tip of the operator, so the operator acquires touch information. As the touch of the finger moves on the touch control screen 610, the operator feels a sense of a circle of the display element inside the display area 632.

When two fingers of an operator or fingers of two operators touch corresponding positions inside the display areas 631 and 632 of the display panel 630 respectively, the touch control screen 610 and the touch control unit 620 detect the positions touched by the two fingers on the touch control screen, the control circuit 690 instructs the touch feedback driving unit 680 to apply a DC electrical signal on the parts of electrode wires corresponding to the display areas 631 and 632 in the electrode wire group 672 respectively, and at the same time the touch feedback driving unit 680 applies a discontinuous electrical signal on the parts of electrode wires corresponding to the display areas 631 and 632 in the touch feedback electrode wire group 671, so the transparent electrodes corresponding to the portions of the display areas 631 and 632 of the touch feedback emission electrodes 660 acquire a discontinuous pulse electrical signal through the drain of the TFT respectively, and the fingers feel a sense of a rectangle of the display elements inside the display area 631 and a sense of a circle of the display element inside the display area 632, respectively.

Thus, different fingers of the operator touch different positions on the touch control screen, different touch information can be felt at the same time. The touch control system 600 thus becomes a touch with feedback system capable of providing multiple touch information at the same time.

The discontinuous electrical signal applied by the touch feedback driving unit 680 on the touch feedback electrode wire group 671 connected to the grid of the TFT may be applied on all electrode wires in the touch feedback electrode wire group 671 one by one in a scanning mode. The DC electrical signals applied on the touch feedback electrode wire group 672 connected to the source of the TFT are applied based on a situation of the display element at the scanning position in combination with the scanning of the touch feedback electrode wire group 671.

### Seventh Embodiment

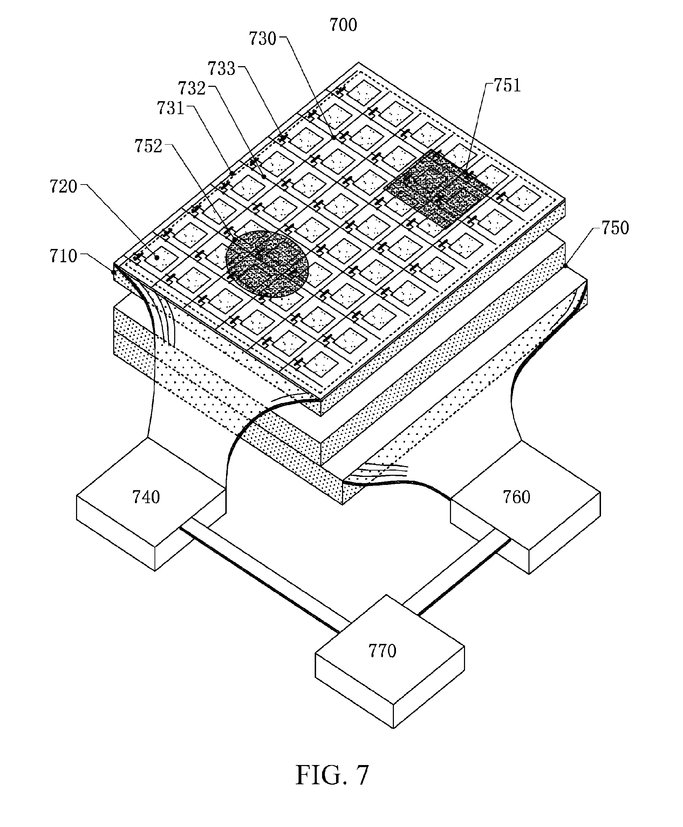

As shown in FIG. 7, a touch with feedback system 700 includes a touch control screen substrate 710, touch feedback emission electrodes 720, a touch system and touch feedback driving sharing active array 730, a touch control and touch feedback driving composite unit 740, a display panel 750, a display driving circuit 760, and a control circuit 770. The touch feedback emission electrodes 720 are block transparent electrodes arranged in arrays and disposed on the transparent touch control screen substrate 710, and cover a whole upper surface of the transparent touch control screen substrate 710. The touch system and touch feedback driving sharing active array 730 is formed of two groups of staggered touch system and touch feedback sharing electrode wire groups 731 and 732, and a TFT array 733. The touch system and touch feedback sharing electrode wire group 731 and the touch system and touch feedback sharing electrode wire group 732 are isolated by an insulating layer. A grid in each TFT in the TFT array 733 is connected to the touch feedback electrode wire group 731, a source of each TFT in the TFT array 733 is connected to the touch feedback electrode wire group 732, and a drain of each TFT in the TFT array 733 is connected to a block transparent electrode in the array of the touch feedback emission electrodes 720. The touch control screen substrate 710 is placed on the display panel 750 with the touch feedback emission electrodes 720 facing outward. The touch system and touch feedback driving sharing active array 730 is connected to the touch control and touch feedback driving composite unit 740, the display panel 750 is connected to the display driving circuit 760, and both the touch control and touch feedback driving composite unit 740 and the display driving circuit 760 are connected to the control circuit 770.

The display contents inside the display area 751 of the display panel 750 are display elements having a rectangular shape, and the display contents inside another display area 752 of the display panel 750 are display elements having a circular shape.

When the finger of the operator touches a corresponding position outside the display areas 751 and 752 of the display panel 750 on the touch control system 700, the touch system and touch feedback driving sharing active array 730 and the touch control and touch feedback driving composite unit 740 are first used for sensing touch control, which detect the position touched by the finger of the operator finger on the touch control screen, and transfer the information of the position touched by the operator to the control circuit 770. The touch system and touch feedback driving sharing active array 730 and the touch control and touch feedback driving composite unit 740 are then used for providing touch feedback signals, so the control circuit 770 instructs the touch control and touch feedback driving composite unit 740 not to apply any electrical signal on the touch feedback electrode wire groups 731 and 732 of the touch system and touch feedback driving sharing active array 730 according to the position touched by the operator outside the display areas 751 and 752, so the touch feedback emission electrodes 720 do not provide any touch information for the operator.

When the finger touches the corresponding position in the display area 751 of the display panel 750, the touch system and touch feedback driving sharing active array 730 and the touch control and touch feedback driving composite unit 740 are first used for sensing touch control, which detect the position touched by the operator finger on the touch control screen, and transfer the information of the position touched by the operator to the control circuit 770. The touch system and touch feedback driving sharing active array 730 and the touch control and touch feedback driving composite unit 740 are then used for providing touch feedback signals, so the control circuit 770 instructs the touch control and touch feedback driving composite unit 740 to apply a DC electrical signal on a part of electrode wires corresponding to the display area 751 in the touch feedback electrode wire group 732 according to the position touched by the operator inside the display area 751 of the display panel 750, and at the same time the touch control and touch feedback driving composite unit 740 applies a discontinuous electrical signal on a part of electrode wires corresponding to the display area 751 in the touch feedback electrode wire group 731, so the transparent electrodes corresponding to the portion of the display area 751 of the touch feedback emission electrodes 720 acquire a discontinuous pulse electrical signal through a drain of a TFT. The touch feedback emission electrodes 720 then transfer the touch feedback electrical signal to the finger tip of the operator, so the operator acquires touch information. As the touch of the finger moves on the touch control system 700, the operator feels a sense of a rectangle of the display element inside the display area 751.

When the finger touches a corresponding position in the display area 752 of the display panel 750, the touch system and touch feedback driving sharing active array 730 and the touch control and touch feedback driving composite unit 740 are first used for sensing touch control, which detect the position touched by the finger of the operator on the touch control screen, and transfer the information of the position touched by the operator to the control circuit 770. The touch system and touch feedback driving sharing active array 730 and the touch control and touch feedback driving composite unit 740 are then used for providing touch feedback signals, and the control circuit 770 instructs the touch control and touch feedback driving composite unit 740 to apply a DC electrical signal on a part of electrode wires corresponding to the display area 752 in the touch feedback electrode wire group 732 according to the position touched by the operator inside the display area 752 of the display panel 750, and at the same time the touch control and touch feedback driving composite unit 740 applies a discontinuous electrical signal on a part of electrode wires corresponding to the display area 751 in the touch feedback electrode wire group 731, so the transparent electrodes corresponding to the portion of the display area 752 of the touch feedback emission electrodes 720 acquire a discontinuous pulse electrical signal through a drain of the TFT. The touch feedback emission electrodes 720 then transfer the touch feedback electrical signal to the finger tip of the operator, so the operator acquires touch information. As the touch of the finger moves on the touch control system 700, the operator feels a sense of a circle of the display element inside the display area 752.

When two fingers of an operator or fingers of two operators touch corresponding positions in the display areas 751 and 752 of the display panel 750 respectively, the touch system and touch feedback driving sharing active array 730 and the touch control and touch feedback driving composite unit 740 detect the positions touched by the two fingers on the touch control screen, the control circuit 770 instructs the touch control and touch feedback driving composite unit 740 to apply a DC electrical signal on a part of electrode wires corresponding to the display areas 751 and 752 in the electrode wire group 732 respectively, and at the same time the touch control and touch feedback driving composite unit 740 applies a discontinuous electrical signal on a part of electrode wires corresponding to the display areas 751 and 752 in the touch feedback electrode wire group 731, so the transparent electrodes corresponding to the portions of the display areas 751 and 752 of the touch feedback emission electrodes 720 acquire a discontinuous pulse electrical signal respectively through the drain of the TFT, and the fingers feel a sense of a rectangle of the display element inside the display area 751 and a sense of a circle of the display element inside the display area 752 respectively.

Thus, the different fingers of the operator touch different positions on the touch control screen, different touch information are felt at the same time. The touch control system 700 thus becomes a touch with feedback system capable of providing multiple touch information at the same time.

The discontinuous electrical signal applied by the touch control and touch feedback driving composite unit 740 on the touch feedback electrode wire group 731 connected to a grid of the TFT may be applied on all electrode wires in the touch feedback electrode wire group 731 one by one in a scanning mode, while a DC electrical signal applied on the touch feedback electrode wire group 732 connected to a source of the TFT is applied based on a situation of the display element at the scanning position in combination with the scanning of the touch feedback electrode wire group 731.

### Eighth Embodiment

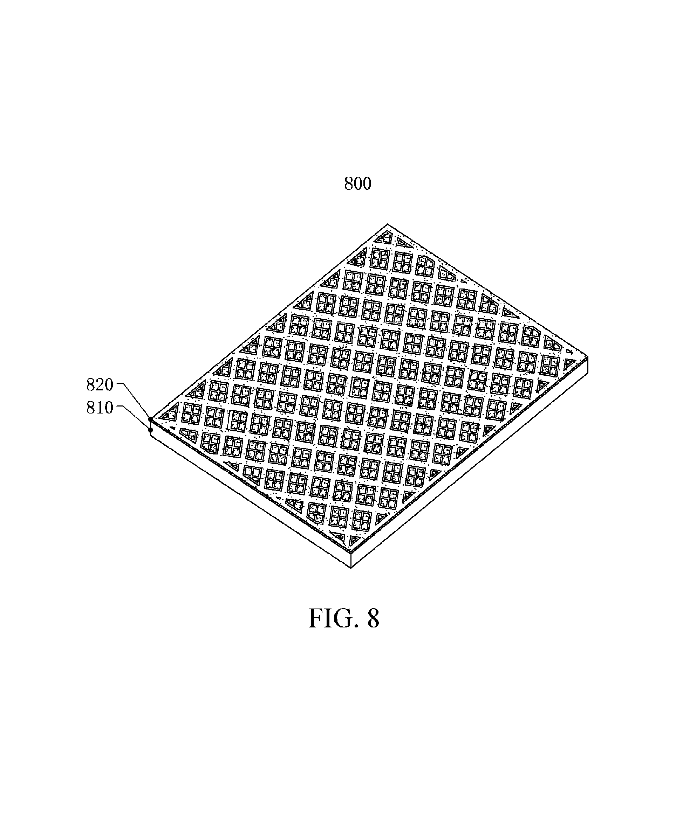

As shown in FIG. 8, a touch with feedback system 800 includes a substrate 810, touch feedback electrodes 820. The touch feedback electrodes 820 are mesh electrodes formed of two diagonal strip electrode groups, and several disconnected and independent block electrodes are disposed in the mesh. When the touch feedback electrodes 820 and the capacitive touch control screen are used in combination, the finger of the operator forms a coupling capacitance with the capacitive touch control screen sensing line at a gap between the mesh touch feedback electrodes, and the independent block electrodes help to form the coupling capacitance, and also prevents unevenness of the optical characteristics of the touch with feedback system 800 due to a pattern of the touch feedback electrodes 820. When the touch with feedback system 800 is used in combination with a display screen, the diagonal strip touch feedback electrodes do not form strip interference fringes with the electrodes of the display screen, so as not affect the display quality.

### Ninth Embodiment

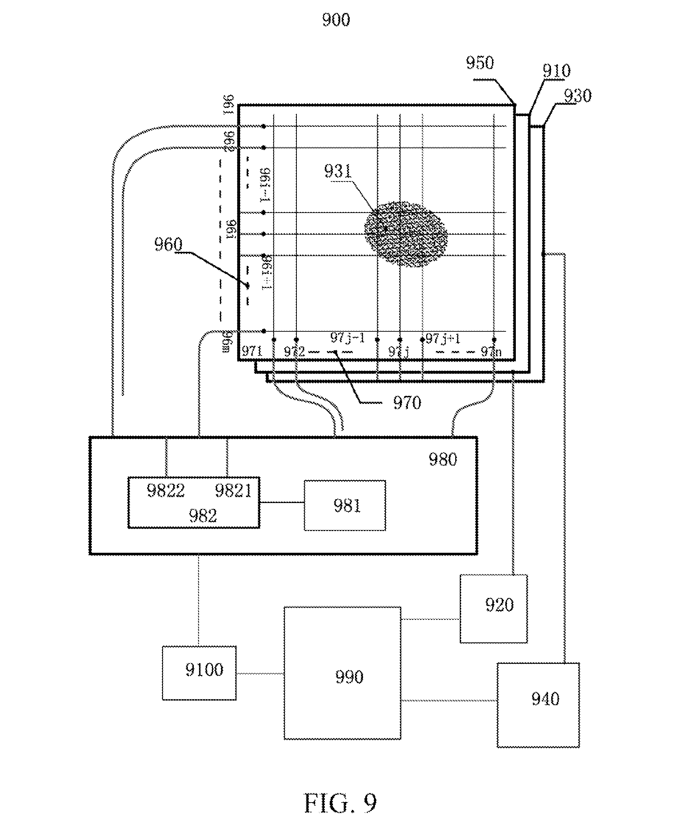

As shown in FIG. 9, a touch with feedback system 900 includes a resistive touch control screen 910, a touch control unit 920, a display panel 930, a display driving circuit 940, a flexible transparent substrate 950, touch feedback electrode groups 960 and 970, a touch feedback driving unit 980, and a control circuit 990. The touch feedback electrode groups 960 and 970 are two orthogonal electrode groups isolated by an insulating layer, the touch feedback electrode group 960 has electrode wires 961, 962, ..., 96i-1, 96i, 96i+1, ..., and 96m, and the touch feedback electrode group 970 has electrode wires 971, 972, ..., 97j-1, 97j, 97j+1, ..., and 97n. The touch feedback electrode groups 960 and 970 are disposed on the flexible transparent substrate 950, and cover a whole upper surface of the flexible transparent substrate 950. The flexible transparent substrate 950 is placed at a side facing a user of the touch control screen 910 with the touch feedback electrode groups 960 and 970 facing outward, and is bonded to the touch control screen 910 together. The touch control screen 910 is placed on the display panel 930. The touch control screen 910 is connected to the touch control unit 920, the display panel 930 is connected to the display driving circuit 940, the touch feedback electrode groups 960 and 970 are connected to the touch feedback driving unit 980, and all the touch control unit 920, the display driving circuit 940, and the touch feedback driving unit 980 are connected to the control circuit 990. An isolation unit 9100 is used for isolating the touch feedback driving unit from the rest circuits, so as to avoid interferences between the circuits. The touch feedback driving unit 980 has a touch excitation source 982 and a touch feedback unit 981, and the touch excitation source 982 has touch feedback signal output terminals 9821 and 9822.

The display contents inside the display area 931 of the display panel 930 are display elements having a circular shape.

When the finger of the operator touches a corresponding position outside the display area 931 of the display panel 930, the touch control screen 910 and the touch control unit 920 detect the position touched by the finger of the operator on the touch control screen, and transfer the information of the position touched by the operator to the control circuit 990. The control circuit 990 instructs the touch feedback driving unit 980 not to apply any electrical signal on the touch feedback electrode wire groups 960 and 970 according to the position touched by the operators outside the display area 931 of the display panel 930, so the touch feedback electrode wires does not provide any touch information for the operator.

When the finger touches the corresponding position in the display area 931 of the display panel 930, the touch control screen 910 and the touch control unit 920 detect the position touched by the finger of the operator on the touch control screen, and transfer the information of the position touched by the operator to the control circuit 990. According to the position touched by the operator inside the display area 931 of the display panel 930, the control circuit 990 instructs the touch feedback driving unit 980 to apply a touch feedback signal on an output terminal 9821 of the touch excitation source 982 on a part of electrode wires 96i corresponding to the display area 931 in the touch feedback electrode wire group 960, and apply a touch feedback signal on the other output terminal 9822 of the touch excitation source 982 on a part of electrode wires 96i-1 and 96i+1 corresponding to the display area 931 in the touch feedback electrode wire group 960, and apply a touch feedback signal on the output terminal 9821 of the touch excitation source 982 on all electrode wires 97i-1, 97i, 97i+1 corresponding to the display area 931 in the touch feedback electrode wire group 970. The touch feedback electrode wires 96i, 97i-1, 97i, 97i+1 apply the touch feedback signal on a touch feedback object, so the touch feedback electrode wires 96i-1 and 96i+1 provide current return-loop paths for the touch feedback signal. Due to different spatial positions of the touch feedback electrodes, the different positions touched by the finger are coupled to different touch feedback electrodes respectively, and a certain position touched by the finger is connected to the output terminal 9821 of the touch feedback signal through a coupling capacitance Ca between the finger and the touch feedback electrode wire on which the touch feedback signal is applied, and the other position touched by the finger is also connected to the other output terminal 9822 of the touch feedback signal through a coupling capacitance Cb between the finger and the touch feedback electrode wire that provides the current return-loop path for the touch feedback signal. A loop is then formed for the touch feedback excitation signal among the touch feedback electrodes that apply the touch feedback signal, the coupling capacitance Ca, the touch finger, the coupling capacitance Cb, and the touch feedback electrodes that provide the current return-loop path, so the operator acquires touch information. As the touch of the finger moves on the touch control screen 910, the operator can feel as sense of a circle of the element displayed inside the display area 931.

The control circuit 990 can also instruct the touch feedback driving unit 980 to apply a touch feedback signal on the output terminal 9821 of the touch excitation source 982 on all row electrode wires 96i-1, 96i, and 96i+1 corresponding to the display area 931 in the touch feedback electrode wire group 960, and apply the touch feedback signal on the other output terminal 9822 of the touch excitation source 982 on all column electrode wires 97i-1, 97i, and 97i+1 corresponding to the display area 931 in the touch feedback electrode wire group 970. The touch feedback electrode wires 96i-1, 96i, and 96i+1 apply the touch feedback signal on the touch feedback object, the touch feedback electrode wires 97i-1, 97i, and 97i+1 provide the current return-loop path for the touch feedback signal. A loop is formed among the touch feedback electrodes that apply the touch feedback signal, the coupling capacitance Ca between the finger and the touch feedback electrodes that apply the touch feedback signal, the touched finger, the coupling capacitance Cb between the finger and the touch feedback electrodes that provide the current return-loop path, and the touch feedback electrodes for providing the current return-loop path, so the operator acquires the touch information.

The touch feedback electrode groups 960 and 970 are disposed on the flexible transparent substrate 950 and cover the whole upper surface of the flexible transparent substrate 950. The flexible transparent substrate 950 is placed at a side facing a user of the touch control screen 910 with the touch feedback electrode groups 960 and 970 facing outward, and is bonded to the touch control screen 910 together. The touch control screen 910 is placed on the display panel 930. A coupling capacitance C_{TD} exists between the touch feedback electrode wire and the sensing line wire. The touch feedback signal output onto the touch feedback electrode wire groups 960 and 970 by the touch excitation source 982 has the tendency of flowing into the electrode wires of the touch control screen 910, the electrodes of the display screen 930, the touch control unit 920, the display driving circuit 940, the control circuit 990, and back into the touch feedback driving unit 980 through the coupling capacitance C_{TD}. However, as an isolation unit 9100 is disposed at a connecting line between the touch feedback driving unit 980 and circuits such as the touch control unit and the display driving circuit, the streaming of the touch feedback signal between the touch control system and the display system is prevented, thus avoiding the influences of the touch feedback signal on the touch control and display.

The touch feedback electrodes for applying the touch feedback signal on the touch feedback object and the touch feedback electrodes for providing the current return-loop path for the touch feedback signal are relative rather than constant. A touch feedback loop is formed among the touch excitation source, the touch feedback electrodes for applying the touch feedback signal, the coupling capacitor between the touch feedback electrodes and the touch feedback object, and the touch feedback electrodes for providing the current return-loop path. The touch feedback signal that flows into the touch feedback electrodes from the touch excitation source then returns to the touch excitation source through the touch feedback object. The touch feedback system is then isolated from other systems, so as to prevent signal crosstalk among different systems, so the touch feedback signal flows in an enclosed system. The touch feedback information is obtained through changes of the specific frequency or other specific features of the touch feedback signal, so as to make the touch sense becomes more intense and sensitive.

Two or more staggered touch feedback electrode groups are disposed on different layers isolated by the insulating layer in the touch with feedback system respectively, and the touch feedback driving unit has a touch excitation source and a touch feedback unit. The touch excitation source has two different output terminals, so two adjacent touch feedback electrode wires on the touch feedback screen are in communication with two different output terminals of the touch excitation source respectively, such that the touch feedback signal that flows out from an output terminal of the touch excitation source flows into touch feedback electrode wires connected thereto, flows into the touch feedback object through the coupling capacitor between the touch feedback electrode wire and the touch feedback object, and then flows back to the touch excitation source from the other output terminal of the touch excitation source in communication with the touched touch feedback electrodes, and the touch feedback signal flows in a touch feedback loop. When the finger of the person approaches or contacts two touch feedback electrode wires in communication with different output terminals of the touch excitation source, the touch feedback signal flows through the finger of the person, thus increasing the sensitiveness of the touch sense.

As the touch feedback signal flows in the loop formed by the touch feedback driving unit and different touch feedback electrode wires of the touch with feedback system, the touch feedback object changes coupling capacitances between different touch feedback electrode wires, causing changes to the current of the touch feedback signal on the touch feedback loop. The touch feedback system (a touch feedback plate and a touch feedback driving unit) is isolated from the touch control system and from the display system (including a display screen, a backlight, and a driving circuit thereof) and from the host machine circuit, and especially, a power source of the touch feedback driving unit is isolated from a power source of the display circuit used by the touch feedback screen and the touch control screen in a superposed mode and from a power source of the host machine. The so-called isolation means to dispose isolators between the touch feedback driving unit and the touch system circuit and the host machine, and between the touch feedback driving unit and the display circuit, so as to prevent the touch feedback signal from flowing between the two circuits. Thus, when the touch feedback screen is used with the touch control screen and the display screen in a superposed mode, the touch feedback signal is unable to flow into the touch system circuit or the display circuit or the host machine circuit from the touch feedback screen and the touch feedback unit and then flow back to the touch feedback unit, so as to avoid interferences on display due to coupling between the touch feedback screen and the touch feedback unit and the touch system circuit and the display circuit, and between the touch feedback screen and the touch feedback unit and the host machine circuit.

The touch feedback electrodes for providing the current return-loop path for the touch feedback signal in the touch with feedback system is disposed on a surface of a substrate in the touch with feedback system, which are a part of or all of the touch feedback electrodes not staggered or staggered with the touch feedback electrodes for applying the touch feedback signal on the surface of the substrate.

The touch feedback electrodes for providing the current return-loop path for the touch feedback signal that are not staggered with the touch feedback electrodes for applying the touch feedback signals are electrodes at one side or two sides adjacent to the touch feedback electrodes for applying the touch feedback signal.

### Tenth Embodiment

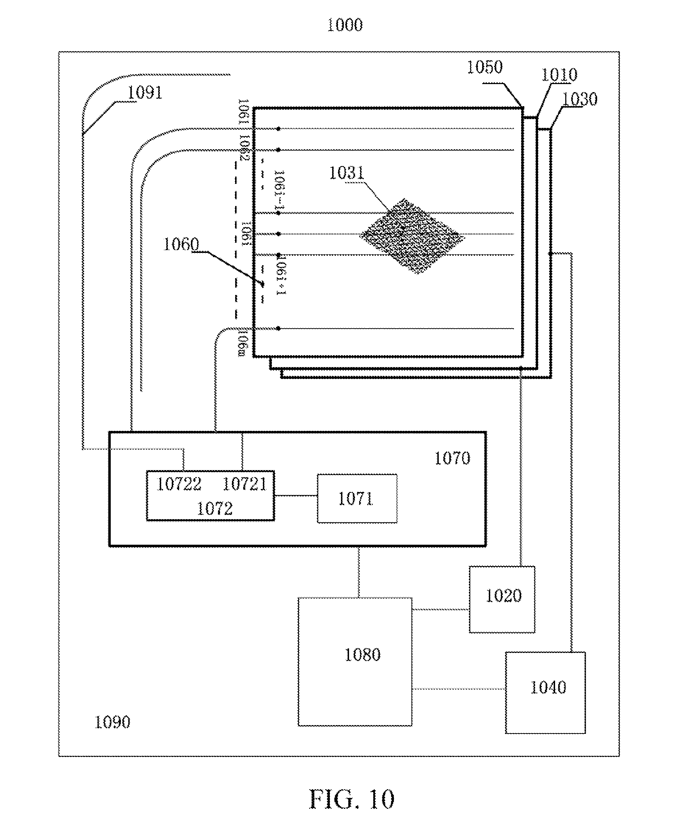

As shown in FIG. 10, a touch with feedback system 1000 includes a resistive touch control screen 1010, a touch control unit 1020, a display panel 1030, a display driving circuit 1040, a flexible transparent substrate 1050, a touch feedback electrode group 1060, a touch feedback driving unit 1070, a control circuit 1080, and an outer case 1090. The touch feedback electrode group 1060 is formed of a group of not staggered electrode wires, which includes electrode wires 1061, 1062, ..., 106i-1, 106i, 106i+1, ..., and 106m. The touch feedback electrode group 1060 is disposed on the flexible transparent substrate 1050 and covers a whole upper surface of the flexible transparent substrate 1050. The flexible transparent substrate 1050 is placed at a side facing a user of the touch control screen 1010 with the touch feedback electrode group1060 facing outward, and is bonded to the touch control screen 1010 together. The touch control screen 1010 is placed on the display panel 1030. The touch control screen 1010 is connected to the touch control unit 1020, the display panel 1030 is connected to the display driving circuit 1040, the touch feedback electrode group 1060 is connected to the touch feedback driving unit 1070, and all the touch control unit 1020, the display driving circuit 1040, and the touch feedback driving unit 1070 are connected to the control circuit 1080. The touch feedback driving unit 1070 has a touch excitation source 1072 and a touch feedback unit 1071, and the touch excitation source 1072 has touch feedback signal output terminals 10721 and 10722. The electrode 1091 is disposed on the outer case 1090.

The display contents inside the display area 1031 of the display panel 1030 are display elements having a rectangular shape.

When a finger of an operator touches a corresponding position outside the display area 1031 of the display panel 1030, the touch control screen 1010 and the touch control unit 1020 detect the position touched by the finger of the operator on the touch control screen, and transfer the information of the position touched by the operator to the control circuit 1080. The control circuit 1080 instructs the touch feedback driving unit 1070 not to apply any electrical signal on the touch feedback electrode wire group 1060 according to the position touched by the operator outside the display area 1031 of the display panel 1030, so the touch feedback electrode wires do not provide any touch information for the operator.

When the finger touches a corresponding position in the display area 1031 of the display panel 1030, the touch control screen 1010 and the touch control unit 1020 detect the position touched by the finger of the operator on the touch control screen, and transfer the information of the position touched by the operator to the control circuit 1080. The control circuit 1080 instructs the touch feedback driving unit 1070 to apply a touch feedback signal on an output terminal 10721 of the touch excitation source 1072 on all corresponding electrode wires 106i-1, 106i, and 106i+1 inside the display area 1031 in the touch feedback electrode wire group 1060 according to the position touched by the operator inside the display panel 1030 display area 1031, and apply a touch feedback signal on the touch feedback object, so the electrode 1091 on the outer case is in communication with the output terminal 10722 of the touch excitation source1072, and the electrode 1091 on the outer case 1090 is used as a touch feedback electrode for providing a current return-loop path for the touch feedback signal. The touch feedback excitation signals output by the touch excitation source 1072 onto the touch feedback electrodes 106i-1, 106i, and 106i+1 flow into the finger through the coupling capacitance between the touch finger and the touch feedback electrodes 106i-1, 106i, and 106i+1, then flow into the electrode 1091 on the outer case through the hand holding the outer case, and then flow back to the touch excitation source 1072 through the outer case electrode 1091. A touch feedback loop is formed among the touch excitation source, the touch feedback electrodes for applying the touch feedback signal on the touch feedback object, the coupling capacitance between the finger and electrode wires, and the electrode on the outer case, so the operator acquires the touch information. As the touch of the finger moves on the control screen 1010, the operator feels a sense of a rectangle of the display element inside the display area 1031.

An electrode is disposed on the outer case of the touch with feedback system, the electrode on the outer case is selected to be connected to the other output terminal of the touch excitation source, the operator holds a product of the touch with feedback system, the hand of the operator contacts the outer case of the touch with feedback system, and the finger approaches or touches the touch feedback screen, so a coupling capacitance is formed between the finger and the touch feedback electrode wires, and the touch feedback excitation signals on the touch feedback electrode wires partially flow into the finger through the coupling capacitance, flow into the electrode on the outer case through the hand holding the product of the touch with feedback system, and then flow back to the touch excitation source, so as to form a flow loop of the touch feedback signal, such that the touch sense is accurate and intense.

The touch feedback electrodes for providing the current return-loop path for the touch feedback signal in the touch with feedback system is disposed on the outer case of the touch with feedback system.

### Eleventh Embodiment

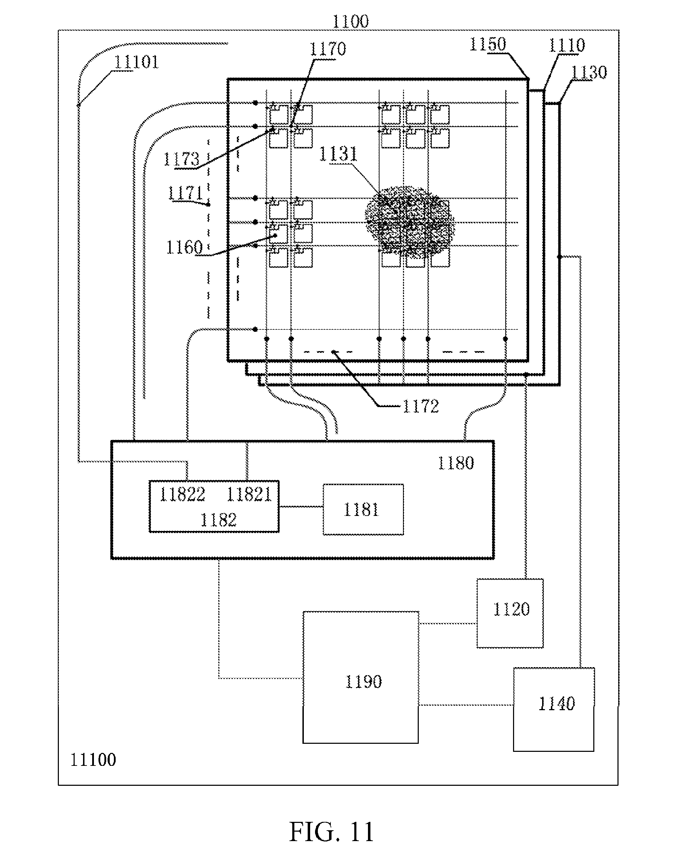

As shown in FIG. 11, a touch with feedback system 1100 includes a touch control screen 1110, a touch control unit 1120, a display panel 1130, a display driving circuit 1140, a transparent substrate 1150, touch feedback emission electrodes 1160, a touch feedback drive active array 1170, a touch feedback driving unit 1180, a control circuit 1190, and an outer case 11100. The touch feedback emission electrodes 1160 are block transparent electrodes arranged in arrays and disposed on the transparent substrate 1150, and cover a whole upper surface of the transparent substrate 1150. The touch feedback drive active array 1170 is formed of two staggered touch feedback electrode wire groups 1171 and 1172, and a TFT array 1173. The touch feedback electrode wire group 1171 and the touch feedback electrode wire group 1172 are isolated by an insulating layer. A grid of each TFT in the TFT array 1173 is connected to the touch feedback electrode wire group 1171, a source of each TFT in the TFT array 1173 is connected to the touch feedback electrode wire group 1172, and a drain of each TFT in the TFT array 1173 is connected to a block transparent electrode in the array of the touch feedback emission electrodes 1160. The transparent substrate 1150 is placed at a side facing a user of the touch control screen 1110 with the touch feedback emission electrodes 1160 facing outward, and is bonded to the touch control screen 1110 together. The touch control screen 1110 is placed on the display panel 1130. The touch control screen 1110 is connected to the touch control unit 1120, the display panel 1130 is connected to the display driving circuit 1140, the touch feedback drive active array 1170 is connected to the touch feedback driving unit 1180, and all the touch control unit 1120, the display driving circuit 1140, and the touch feedback driving unit 1180 are connected to the control circuit 1190. The touch feedback driving unit 1180 has a touch excitation source 1182 and a touch feedback unit 1181, and the touch excitation source 1182 has touch feedback signal output terminals 11821 and 11822. An electrode 11101 is disposed on the outer case 11100.

The display contents inside the display area 1131 of the display panel 1130 are display elements having a circle shape.

When the finger of the operator touches a corresponding position outside the display area 1131 of the display panel 1130, the touch control screen 1110 and the touch control unit 1120 detect the position touched by the finger of the operator on the touch control screen, and transfer the information of the position touched by the operator to the control circuit 1190. The control circuit 1190 instructs the touch feedback driving unit 1180 not to apply any electrical signal on the touch feedback electrode wire groups 1171 and 1172 of the touch feedback drive active array 1170 according to the position touched by the operator outside the display area 1131 of the display panel 1130, so the touch feedback emission electrodes 1160 do not provide any touch information for the operator.

When the finger touches a corresponding position in the display area 1131 of the display panel 1130, the touch control screen 1110 and the touch control unit 1120 detect the position touched by the finger of the operator on the touch control screen, and transfer the information of the position touched by the operator to the control circuit 1190. The control circuit 1190 instructs the touch feedback driving unit 1180 to apply a DC electrical signal on a part of electrode wires corresponding to the display area 1131 in the touch feedback electrode wire group 1171 according to the position touched by the operator inside the display area 1131 of the display panel 1130, and at the same time the touch feedback driving unit 1180 applies a discontinuous electrical signal on a part of electrode wires corresponding to the display area 1131 in the touch feedback electrode wire group 1172, and the transparent electrodes corresponding to the portion of the display area 1131 of the touch feedback emission electrodes 1160 acquire a discontinuous pulse electrical signal sent by an output terminal 11821 of the touch excitation source 1182 through a drain of a TFT. The electrode 11101 on the outer case is in communication with the output terminal 11822 of the touch excitation source 1182, so the electrode 11101 on the outer case 11100 is used as a touch feedback electrode for providing a current return-loop path for the touch feedback signal. The touch feedback excitation signal output by the touch excitation source 1182 onto the transparent electrodes corresponding to the portion of the display area 1131 of the touch feedback emission electrodes 1160 flows into the finger through coupling capacitance between the touch finger and the touch feedback emission electrodes, flows into the electrode 11101 on the outer case through a hand holding the outer case, and then flows back to the touch excitation source 1182 from the outer case electrode 11101. A touch feedback loop is formed of the touch excitation source, the touch feedback emission electrodes, the coupling capacitance between the finger and the electrode wires, and the electrode on the outer case, so the operator acquires the touch information. As the touch of the finger moves on the touch control screen 1110, the operator feels a sense of a circle of the display element inside the display area 1131.

The electrode is disposed on the outer case in the touch with feedback system, the electrode on the outer case is selected to be connected to the other output terminal of the touch excitation source, the operator holds a product of the touch with feedback system, a hand contacts the outer case of the touch with feedback system, a finger approaches or touches the touch feedback screen, so a coupling capacitance is formed between the finger and the touch feedback electrode wires, and the touch feedback excitation signal on the touch feedback electrode wires flows into the finger through the coupling capacitance, flows into the electrode on the outer case through the hand holding the product of the touch with feedback system, and then flows back to the touch excitation source, so as to form a flow loop of the touch feedback signal, such that the touch sense is accurate and intense.

The touch feedback electrodes for providing the current return-loop path for the touch feedback signal in the touch with feedback system is disposed on the outer case of the touch with feedback system.

The contents above are further illustration of the present invention in detail with reference to the specific preferred embodiments, and the illustration should not be construed as limiting the embodiments of the present invention. Persons of ordinary skill in the art can make several simple derivations or replacements to the present invention without departing from the idea of the present invention, and it should be regarded that the derivations or replacements fall within the protection scope of the present invention.

## Claims

1. A touch with feedback system, formed of a substrate, sensing lines, a touch control unit, touch feedback electrodes, and a touch feedback driving unit, wherein the sensing lines and the touch control unit are used for detecting a position of a finger of an operator on the substrate, the touch feedback electrodes and the touch feedback driving unit are used for providing touch information for the detected finger of the operator,
the touch feedback electrodes are disposed at a surface of the substrate at a side facing a user disposed with the sensing lines used for detecting a touch control position, the sensing lines are connected to the touch control unit, and the touch feedback electrodes are connected to the touch feedback driving unit to transmit a touch feedback signal.

2. The touch with feedback system according to claim 1, wherein
an active device array is provided on the substrate disposed with the touch feedback electrodes, two touch feedback electrode wire groups are connected to two terminals of each active device in the active device array respectively, and the other terminal of the active device is then connected to the touch feedback emission electrodes.

3. The touch with feedback system according to claim 2, wherein
the active device array is a thin-film transistor (TFT) array, and the two touch feedback electrode wire groups are connected to a grid and a source of a TFT respectively, a drain of the TFT is connected to a touch feedback emission electrode group, and the two touch feedback electrode wire groups and the touch feedback emission electrode group are isolated by insulating layers.

4. The touch with feedback system according to claim 1, wherein
the sensing lines and the touch feedback electrodes are disposed on different substrates.

5. The touch with feedback system according to claim 1, wherein
the sensing lines and the touch feedback electrodes are disposed on different surfaces of the same substrate, or disposed on a same surface of the same substrate.

6. The touch with feedback system according to claim 1, wherein
the touch feedback electrodes and the sensing lines time division multiplex the same electrode.

7. The touch with feedback system according to claim 1, wherein
the touch feedback electrode is a planar electrode, a mesh electrode, a block electrode or a wire electrode.

8. The touch with feedback system according to claim 1, wherein
an insulating protection layer is disposed on a surface of the touch feedback electrodes.

9. A touch with feedback system, formed of a substrate, sensing lines, a touch control unit, touch feedback electrodes, a touch feedback driving unit, and a control circuit, wherein the sensing lines and the touch control unit are used for detecting a position of a finger of an operator on the substrate, the touch feedback electrodes and the touch feedback driving unit are used for providing touch information for the detected finger of the operator,
the touch feedback electrodes are disposed at a surface of the substrate at a side facing a user disposed with the sensing lines used for detecting a touch control position, the sensing lines are connected to the touch control unit, the touch feedback electrodes are connected to the touch feedback driving unit, both the touch control unit and the touch feedback driving unit are connected to the control circuit, and the control circuit enables the touch feedback driving unit to apply different electrical signals on the touch feedback electrodes according to different positions of a touch control screen touched by the operator.

10. A touch with feedback system, formed of a display panel, a display driving circuit, sensing lines, a touch control unit, touch feedback electrodes, a touch feedback driving unit, and a control circuit, wherein the display panel is used for displaying information, the sensing lines and the touch control unit are used for detecting a position of a finger of an operator on the substrate, the touch feedback electrodes and the touch feedback driving unit are used for providing touch information for the detected finger of the operator,
the touch feedback electrodes are disposed on a surface of the substrate at a side facing a user of the display panel, the display panel is connected to the display driving circuit, the sensing lines are connected to the touch control unit, the touch feedback electrodes are connected to the touch feedback driving unit, all the display driving circuit, the touch control unit, and the touch feedback driving unit are connected to the control circuit, and the control circuit enables the touch feedback driving unit to apply different electrical signals on the touch feedback electrodes according to positions touched by the operator, different display elements, and different statuses of the display elements on a display picture.

11. The touch with feedback system according to claim 9 or 10, wherein
different electrical signals applied on the touch feedback electrodes by the touch feedback driving unit represent that at least one of a signal frequency, strength, and discontinuity is different.

12. The touch with feedback system according to claim 10, wherein
the display element is an operable display element selected from a push button, a dial button, a slide button, a rotation button, or also a non-operable display element.

13. The touch with feedback system according to claim 10, wherein
electrical signals applied on the touch feedback electrodes by the touch feedback driving unit are different according to different position touched by the finger of the operator inside the display element on the display picture.

14. The touch with feedback system according to claim 9 or 10, wherein
a loop is formed for the touch feedback signal of the touch with feedback system, when one or more touch feedback electrodes are in communication with an output terminal of a touch excitation source and a touch feedback signal is being applied on the touch feedback electrodes, the other one or more touch feedback electrodes are in communication with the other output terminals of the touch excitation source or in communication with another touch excitation source, so as to provide a current return-loop path for the touch feedback signal, and two or more touch feedback electrodes connected to different output terminals of the touch feedback signal, a touch feedback object, and a coupling capacitance between the touch feedback object and the touch feedback electrodes form a touch feedback loop.

15. The touch with feedback system according to claim 14, wherein
the touch feedback electrodes for providing the current return-loop path for the touch feedback signal in the touch with feedback system are disposed on a surface of a substrate in the touch with feedback system, and are a part of or all of touch feedback electrodes not staggered or staggered with the touch feedback electrodes for applying the touch feedback signal on the substrate surface; or are disposed on an outer case of the touch with feedback system.

16. The touch with feedback system according to claim 15, wherein
the touch feedback electrodes for providing the current return-loop path for the touch feedback signal not staggered with the touch feedback electrodes for applying the touch feedback signal are electrodes at one side or two sides adjacent to the touch feedback electrodes for applying the touch feedback signal.
